# EUROPÄISCHE PATENTSCHRIFT

(11) **EP 1 056 590 B1**
(45) Veröffentlichungstag und Bekanntmachung des Hinweises auf die Patenterteilung: **02.04.2003**
(21) Anmeldenummer: 99903688.2
(22) Anmeldetag: 28.01.1999
(51) Int. Cl.: B30B 11/26, B27N 3/28, B30B 15/30

(54) **STRANGPRESSE FÜR PFLANZLICHE KLEINTEILE**
EXTRUDER FOR SMALL PLANT PARTS
EXTRUDEUSE POUR PETITS ELEMENTS VEGETAUX

(30) Priorität: 04.02.1998 DE 29801829 U; 14.02.1998 DE 29802527 U
(43) Veröffentlichungstag der Anmeldung: 06.12.2000
(60) Teilanmeldung: 02003527.5
(73) Patentinhaber: Anton Heggenstaller AG, D-86556 Unterbernbach (DE)
(72) Erfinder: SPIES, Xaver, D-86556 Kühbach-Unterbernbach (DE)
(74) Vertreter: Ernicke, Hans-Dieter, Dipl.-Ing.
(86) Internationale Anmeldenummer: EP9900558
(87) Internationale Veröffentlichungsnummer: WO99039901

(56) Entgegenhaltungen:
- EP-A- 0 084 640
- EP-A- 0 218 476
- WO-A-86/05140
- DE-U- 8 906 494
- DE-U- 29 802 527
- FR-A- 2 527 139
- GB-A- 565 031
- US-A- 2 717 420

## Beschreibung

Die Erfindung bezieht sich auf ein Verfahren zum Strangpressen von hohlen Strängen aus pflanzlichen, insbesondere hölzernen Kleinteilen mit einer horizontal wirkenden Kolbenstrangpresse, bei der ein Zuführschacht mit seinem unteren Ende in einen Füll- und Pressraum mündet und durch einen hin- und herbeweglichen, eine Durchlassöffnung aufweisenden Schließschieber verschließbar ist, wobei der Strangpresskolben auf mindestens einem, den Füll- und Pressraum in Strangpressrichtung durchsetzenden Dorn geführt ist, sowie auf eine Strangpresse zur Durchführung des Verfahrens.

Eine Strangpresse mit den vorstehenden Merkmalen ist durch die DE-A-28 10 070 bekannt.

Das Problem der bekannten Strangpressen dieser Art besteht darin, dass der Füll- und Pressraum nicht gleichmäßig mit den pflanzlichen Kleinteilen gefüllt wird, wodurch sich nach dem Strangpresshub Bereiche unterschiedlicher Dichte im fertigen Strang ergeben. Bedingt ist diese ungleichmäßige Befüllung durch die Anwesenheit des Dorns , welches das Zentrum des Füll- und Pressraumes in Strangpressrichtung durchsetzt. Das im freien Fall aus dem Zuführschacht herangeführte pflanzliche Material muß diesem Dorn ausweichen und kann dann nicht mehr den Bereich unterhalb des Dornes genügend ausfüllen.

Der Erfindung liegt somit die Aufgabe zugrunde, die Befüllung des Füll- und Pressraumes mit den pflanzlichen Kleinteilen zu verbessern, die Bereiche unterschiedlicher Dichte im Strang möglichst zu vermeiden und die Leistung der Strangpresse insgesamt zu steigern.

Ausgehend von der eingangs erwähnten vorbekannten Strangpresse besteht das erfindungsgemäße Verfahren darin, daß der Dorn als Heizrohr ausgebildet ist, und dass die pflanzlichen Kleinteile beim Befüllen des Füllund Pressraumes gezielt in Richtung des unter dem Heizrohr befindlichen Raumbereiches durch ein im unteren Teil des Zuführschachtes befindliches, aus zwei Achsen mit parallel zueinander gelagerten Paddeln bestehendes Rührwerk gefördert werden. Damit eröffnet die Erfindung die Möglichkeit, den Befüllvorgang des Füll- und Pressraumes zu beschleunigen beziehungsweise zu verbessern.

Eine Befüllvorrichtung mit einer Achse ist aus Figur 1 des DE-GM 89 06 494.1 bekannt geworden. Dort wird das Kleinteilgemenge durch einen aufrechten Zuführschacht nach unten in Richtung zum Füll- und Pressraum der Strangpresse gefördert. Im unteren Teil des Zuführschachtes ist ein Rührwerk, bestehend aus zwei um eine gemeinsame Achse rotierenden Flügeln, zumindest zeitweise drehbar angetrieben. Dieses Rührwerk hat die Aufgabe, das Kleinteilgemenge in einer schnelleren Zeit in den Füllund Pressraum der Strangpresse zu fördern, als dies durch freien Fall des Gemenges geschehen würde.

Die Praxis hat gezeigt, dass zusätzlich zur Beschleunigung des Füllvorganges auch noch eine Vorverdichtung des Gemenges im Füll- und Pressraum erzielt werden kann, was sich positiv auf die Leistungssteigerung der Strangpresse auswirkt.

Wenn sich aber im Füll- und Pressraum zentrisch ein in Strangpressrichtung erstreckendes Heizrohr befindet, das besonders dann notwendig ist, wenn Palettenklötze im Strangpressverfahren hergestellt werden sollen, dann hat die vorbekannte Einrichtung den Nachteil, dass dieses Heizrohr beim Befüllvorgang einem quer zu seiner Achse sich erstreckenden Verformungsdruck unterliegt. Die Folge davon ist, dass der Strangpresskolben, der das Heizrohr führt, beim Strangpresshub Querkräften unterliegt, weil das Heizrohr und die Seitenwände des Füll- und Pressraumes nicht mehr parallel zueinander liegen.

Es hat sich somit herausgestellt, dass das vorbekannte Rührwerk mit seinem Vorteil der schnelleren Befüllung des Füll- und Pressraumes nicht zum Befüllen solcher Füll- und Pressräume geeignet ist, die mit einem Heizrohr ausgerüstet sind.

Der Erfindung liegt somit die zusätzliche Aufgabe zugrunde, diese Nachteile zu vermeiden und das Befüllen eines Füll- und Pressraumes, der ein Heizrohr enthält, zu beschleunigen, ohne die Position des Heizrohres zu verändern.

Ausgehend vom DE-GM 89 06 494.1 besteht die Vorrichtung zur Durchführung des erfindungsgemäßen Verfahrens darin, dass das Rührwerk aus zwei mit ihren Achsen parallel zueinander gelagerten Paddeln besteht, die gegenläufig rotierend antreibbar und zueinander versetzt angeordnet sind, wobei die Förderrichtung der Paddel an einem den Füll- und Pressraum durchsetzenden Heizrohr vorbeizielt.

Während beim Stand der Technik zwei Paddel um eine gemeinsame Achse gleichsinnig rotieren, lehrt die Erfindung, jedes einzelne Paddel für sich zu lagern und drehbar anzutreiben, die Drehrichtung beider Paddel gegeneinanderläufig zu wählen und obendrein die Anordnung der Paddel so zu wählen, dass durch die Förderung der Kleinteile keine direkte Belastung des Heizrohres erfolgt. Die Hauptströmungsrichtung der Kleinteile ist vielmehr in den jeweiligen Zwischenraum zwischen dem Heizrohr und den Seitenwänden des Füll- und Pressraumes gewählt, was den zusätzlichen Vorteil mit sich bringt, dass der untere Bereich des Füll- und Pressraumes, insbesondere unterhalb des Heizrohres, gleichmäßiger mit den pflanzlichen Kleinteilen ausgefüllt wird.

Dieser Gegenstand der Erfindung mit den gegenläufig rotierenden Paddeln ist auch für sich mit Erfolg bei Strangpressen anwendbar, die keine verstellbaren Seitenwände des Füll- und Pressraumes aufweisen.

Es ist zwar durch die DE-42 14 111 A1 bekannt, im Zuführungsbereich von Pelletierwalzen für die Verpressung von pflanzlichem Halmgut zwei parallel zueinander angeordnete Dosierwalzen antreibbar anzuordnen, um die Förderleistung an die Pelletierleistung anpassen zu können. Dadurch werden jedoch weder die Aufgabe der vorliegenden Erfindung gelöst noch der Gegenstand der Erfindung nahegelegt.

Ausführungsarten der Erfindung ergeben sich aus den Ansprüchen 3 bis 9.

So ist beispielsweise gemäß Anspruch 3 vorgesehen, dass der Versatz der Paddel derart gewählt ist, dass sie in einer Grundstellung sich nach entgegengesetzten Richtungen erstrecken. Auf diese Weise wird eine gleichmäßige Beschickung des Füll- und Pressraums erreicht. Weiterhin empfiehlt es sich, wenn der Zuführschacht in dem das Rührwerk umgebenden Bereich hohlzylinderförmig ausgebildet ist. Dann wirkt das Rührwerk mit größerem Wirkungsgrad wie ein Flügelverdichter.

Im Rahmen von Ausgestaltungen können die Paddel aus Gummi bestehen oder aber auch aus einem harten Material, z.B. Stahl, hergestellt sein, wobei es sich im letzteren Fall empfiehlt, die Paddel federnd nachgiebig zu befestigen.

Eine weitere Ausführungsart ist den Ansprüchen 7 bis 9 zu entnehmen, bei denen vorgesehen ist, den Zuführschacht sowie einen Halter für einen die Einfüllöffnung des Füllund Pressraumes abdeckenden Schließkörper an einer oberen, sich parallel zur Strangpressachse erstreckenden Schwenkachse derart pendelförmig bewegbar zu lagern, dass in den Endstellungen der Pendelbewegung die Einfüllöffnung entweder vom Schließkörper abgedeckt ist oder deckungsgleich zur Austrittsöffnung des Zuführschachtes liegt.

Das Prinzip des schwenkbaren Zuführschachtes ist zwar aus dem eingangs erwähnten DE-GM 89 06 494.1 bekannt. Dort ist aber das Schwenklager für die Halterung des Schließkörpers distanziert von der Schwenkachse des Zuführschachtes. Die Ausführungsart der Erfindung vereinigt hingegen die Vorteile des erfindungsgemäßen Rührwerkes mit einem schwenkbar gelagerten Schließkörper für die Abdeckung der Einfüllöffnung des Füll- und Pressraumes, wobei auch diese Kombination besonders dafür geeignet ist, einen durch einen Heizdorn ausgestatteten Füll- und Pressraum einer Strangpresse schneller zu befüllen, ohne den Heizdorn zu belasten.

Weil der Schließkörper in seiner Schließstellung den Seitendruck der Strangpressverdichtung aufnehmen muß, empfiehlt es sich, den Schließkörper an seiner Halterung höhenverstellbar zu befestigen, um dadurch eine genaue Justierung des Schließkörpers in seiner Schließstellung herbeizuführen.

Ausführungs arten der Erfindung sind in der Zeichnung schematisch und beispielsweise dargestellt. Es zeigen:
- Figur 1:: einen Vertikalschnitt durch einen ortsfesten Zuführschacht für den Füll- und Preßraum einer horizontalen Strangpresse,
- Figur 2:: einen Vertikalschnitt durch einen schwenkbar gelagerten Zuführschacht für den Füll- und Preßraum einer horizontalen Strangpresse und
- Figur 3:: einen vertikalen Schnitt durch die Anordnung gemäß Figur 4 in der Schließstellung des Schließkörpers.

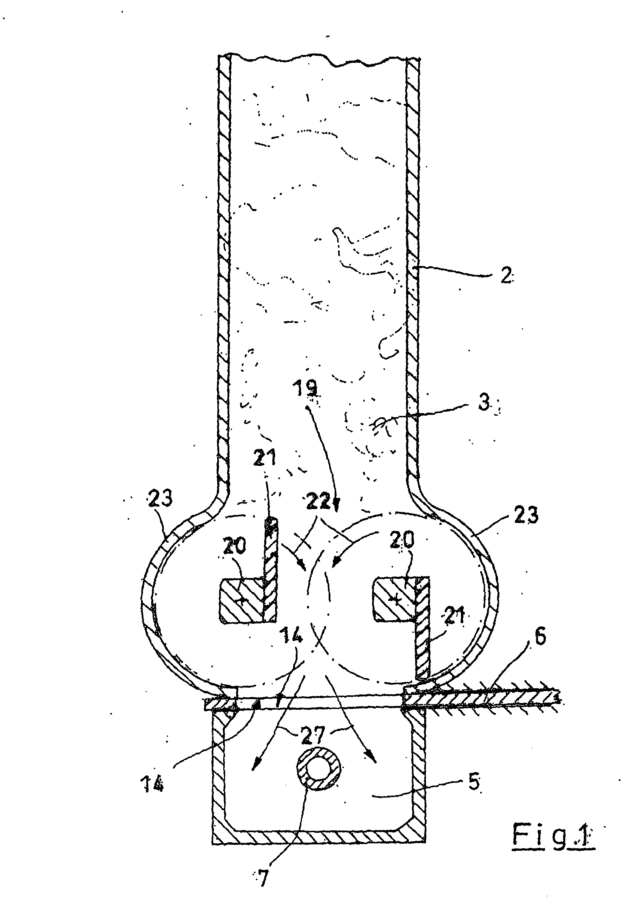

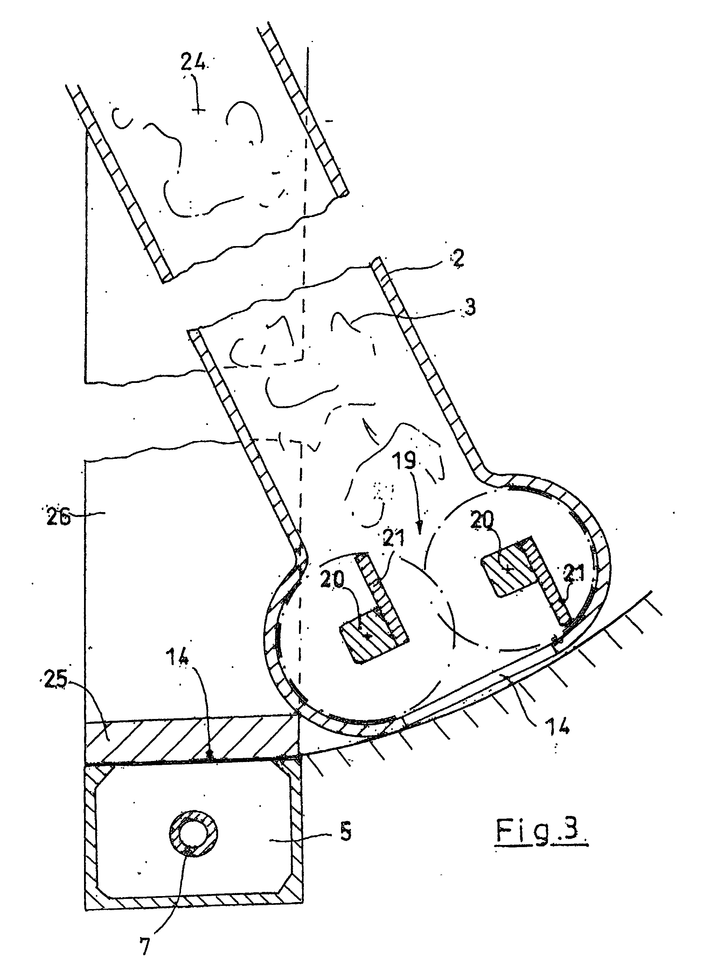

Das Ausführungsbeispiel der Figur 3 zeigt lediglich den Querschnitt durch einen Füll- und Preßraum (5) einer Strangpresse, wie er durch die DE-A-28 10 070 bekannt ist. Das zu verpressende Kleinteilgemenge (3) befindet sich in einem aufrechten Zuführschacht (2), dessen unteres Ende durch einen Schließschieber (6) verschließbar ist, der im Beispiel der Figur 1 in geöffneter Stellung dargestellt ist. Dieser Schließschieber (6) weist eine Durchlaßöffnung (28) auf, deren lichte Weite etwa dem Querschnitt der Einfüllöffnung (14) des Füll- und Preßraumes (5) entspricht. Wenn man den Schließschieber (6) wie beim Stand der Technik (DE-A-28 10 070) wiederholt hin- und herbewegt, erfolgt eine bessere Verteilung des Füllgutes im Füll- und Preßraum (5).

Es versteht sich von selbst, daß das Kleinteilgemenge (3) mit Bindemitteln vermengt und aus pflanzlichen, insbesondere hölzernen Kleinteilen bestehen kann, wobei die Größe und Art der Kleinteile sowie deren Beschaffenheit im Rahmen des Standes der Technik beliebig variierbar ist.

Der Füll- und Preßraum (5) der Strangpresse wird zentrisch durch ein in der Strangpreßachse sich erstreckendes Heizrohr (7) durchsetzt, welches die Aufgabe hat, den zu bildenden Strang von innen her aufzuwärmen und auszuhärten. Demgemäß ist der in Figur 1 nicht dargestellte Strangpreßkolben auf diesem Heizrohr (7) geführt. Falls der zu bildende Strang breiter als in Figur 1 dargestellt ist, kann es sich empfehlen, mehrere Heizrohre (7) im Abstand nebeneinander anzuordnen und den Strangpreßkolben entsprechend auszubilden.

Beim Ausführungsbeispiel der Figur 1 ist außerdem ein aufrechter Zuführschacht (2) im Vertikalschnitt dargestellt, durch den pflanzliche Kleinteile (3) nach unten gelangen sollen, um in dem Füll- und Preßraum (5) der horizontalen Strangpresse verdichtet zu werden. Die pflanzlichen Kleinteile können mit Bindemitteln vermengt sein, je nachdem, welche Beschaffenheit der zu bildende Strang besitzen soll.

Am unteren Ende des Zuführschachtes (2) befindet sich eine Austrittsöffnung (14), die durch den Schließschieber (6), der quer beweglich ist, verschließbar ist und im geöffneten Zustand deckungsgleich einer Einfüllöffnung (14) des Füll- und Preßraumes (5) gegenüberliegt. Im zentrischen Bereich des Füll- und Preßraumes (5) befindet sich das Heizrohr (7), das in der hohlen Kolbenstange des nicht dargestellten Strangpreßkolbens geführt ist. Die Achse des Heizrohres (7) ist zugleich die Strangpreßachse.

Im unteren Bereich des Zuführschachtes (2) befindet sich ein Rührwerk (19), welches die Aufgabe hat, die pflanzlichen Kleinteile (3) schnell und gezielt in den Füll- und Preßraum (5) zu fördern, ohne die Position des Heizrohres zu verändern.

Zu diesem Zweck besteht das Rührwerk (19) aus zwei voneinander distanziert und parallel zueinander gelagerten Wellen (20), an denen je ein einflügeliges Paddel (21) befestigt ist. Die Drehrichtung (22) der Wellen (20) ist gegeneinander gerichtet. Außerdem sind die Paddel (21) in der in Figur 1 gezeigten Grundstellung gegeneinander gerichtet. Auf diese Weise entsteht eine Strömung der geförderten Kleinteile (3) in Richtung der Pfeile (27) (Förderrichtung). Diese Förderrichtung (27) ist bewußt so gewählt, daß sie am Heizrohr (7) vorbeizielt und statt dessen die unteren Eckbereiche des Preß- und Füllraumes (5) gezielt ausfüllt.

Das in Figur 1 dargestellte Rührwerk (19) ist in einem hohlzylinderförmig gestalteten Schachtteil (23) drehbar gelagert. Hierbei können die einflügeligen Paddel (21) so dimensioniert werden, daß sie längs der Innenfläche des hohlzylinderförmigen Schachtteiles (23) entlanggleiten, was aber nicht unbedingt erforderlich ist. Die Paddel (21) sind bei einem Ausführungsbeispiel aus Gummi hergestellt und weisen daher eine Flexibilität auf, die beim Stau der zu fördernden Kleinteile von Nutzen sein kann. Es ist aber auch denkbar, die Paddel (21) aus hartem Material, z.B. Stahl, herzustellen. Dann empfiehlt es sich aber, die Befestigung der Paddel an den Wellen (20) bzw. die Lagerung der Wellen (20) elastisch zu gestalten, um ein gewisses Nachgeben beim Stau der Kleinteile zu erreichen.

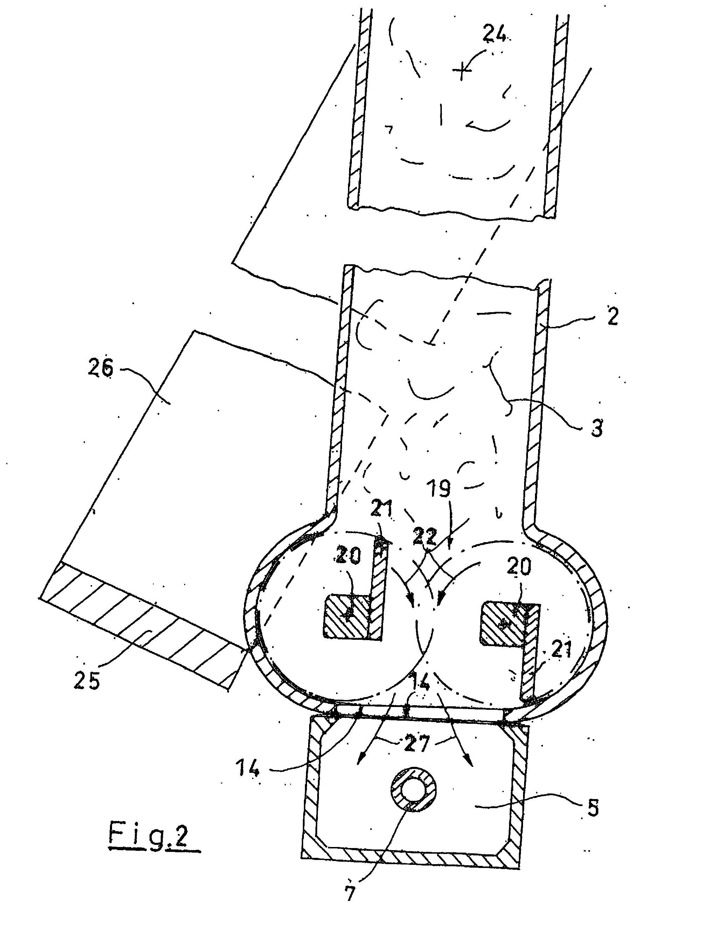

Während die Figur 1 von einem ortsfesten Zuführschacht (2) mit einem hin- und herbewegbaren Schließschieber (6) ausgeht, befaßt sich das Ausführungsbeispiel der Figuren 2 und 3 mit einem schwenkbar gelagerten Zuführschacht (2) und mit einem Schließschieber (25), der zusammen mit seiner Halterung (26) und dem Zuführschacht (2) aus einer Öffnungsstellung gemäß Figur 2 in eine Schließstellung gemäß Figur 3 verschwenken kann. Die Halterung (26) und der Zuführschacht (2) sind hierbei gemeinsam um eine Schwenkachse (24) drehbar gelagert. Der Ort der Schwenkachse (24) ist in der Zeichnung unmaßstäblich dargestellt. In Wirklichkeit weisen der Zuführschacht (2) und die Halterung (26) eine wesentlich größere Länge auf, wodurch die Kurvenbahn des Schließschiebers (25) wesentlich flacher als in der Zeichnung dargestellt, verläuft.

Der Vorteil dieser Ausgestaltung gemäß Figuren 2 und 3 liegt darin, daß das Befüllen und Verschließen des Füllund Preßraumes (5) noch schneller vonstatten gehen kann, weil während der Schwenkbewegung des Zuführschachtes (2) das Rührwerk (19) immer noch tätig ist und auch weniger leicht zugängliche Bereiche des Füll- und Preßraumes (5) erschließen kann.

Der Schließschieber (25) muß in der in Figur 3 gezeigten Stellung die Einfüllöffnung (14) des Füll- und Preßraumes (5) total abschließen und beim Arbeitshub den auf die Wandflächen des Rezipienten wirkenden Druck aufnehmen. Um die korrekte Schließstellung immer zu gewährleisten, empfiehlt es sich, den Schließschieber (25) an seiner Halterung (26) höhenverstellbar anzuordnen, um bei Montage die richtige Schließstellung zu erhalten und bei Abnützung eine Nachstellung durchführen zu können. Diese Verstelleinrichtung ist in der Zeichnung nicht dargestellt, weil sie mit üblichen Mitteln ausgeführt werden kann.

### STÜCKLISTE

- 2: Zuführschacht
- 3: Kleinteilgemenge
- 5: Füll- und Preßraum
- 6: Schließschieber
- 7: Heizrohr
- 14: Einfüllöffnung
- 19: Rührwerk
- 20: Welle
- 21: einflügeliges Paddel
- 22: Drehrichtung
- 23: hohlzylinderförmiger Schachtteil
- 24: Schwenkachse
- 25: Schließkörper
- 26: Halterung
- 27: Förderrichtung
- 28: Durchlaßöffnung im Schließschieber

## Patentansprüche

1. Verfahren zum Strangpressen von hohlen Strängen aus pflanzlichen, insbesondere hölzernen Kleinteilen (3) mit einer horizontal wirkenden Kolbenstrangpresse, bei der ein Zuführschacht (2) mit seinem unteren Ende in einen Füll- und Pressraum (5) mündet und durch einen hin- und herbeweglichen, eine Durchlassöffnung aufweisenden Schließschieber (6) verschließbar ist, wobei der Strangpresskolben auf mindestens einem, den Füll- und Pressraum (5) in Strangpressrichtung durchsetzenden Dorn (7) geführt ist, **dadurch gekennzeichnet, dass** der Dorn als Heizrohr ausgebildet ist, und dass die pflanzlichen Kleinteile beim Befüllen des Füll- und Pressraumes (5) gezielt in Richtung des unter dem Heirohr (7) befindlichen Raumbereiches durch ein im unteren Teil des Zuführschachtes (2) befindliches, aus zwei Achsen (20) mit parallel zueinander gelagerten Paddeln (21) bestehendes Rührwerk (19) gefördert wird.

2. Befüllvorrichtung für den Füll- und Pressraum (5) einer horizontalen Strangpresse zur Durchführung des Verfahrens nach Anspruch 1, bestehend aus einem aufrechten Zuführschacht (2) für die zu verpressenden pflanzlichen Kleinteile (3), dessen unten befindliche Austrittsöffnung (14) deckungsgleich zu der mittels eines Schließschiebers (6) verschließbaren Einfüllöffnung (14) des Füll- und Pressraumes (5) zu liegen kommt, wobei zur Beschleunigung des Füllvorganges ein im unteren Teil des Zuführschachtes (2) parallel zur Strangpressachse drehbar gelagertes Rührwerk (19) mindestens zeitweise antreibbar ist, **dadurch gekennzeichnet, dass** das Rührwerk (19) aus zwei mit ihren Achsen (20) parallel zueinander gelagerten Paddeln (21) besteht, die gegenläufig rotierend antreibbar und zueinander versetzt angeordnet sind, wobei die Förderrichtung der Paddel (21) an einem den Füll- und Pressraum (5) durchsetzenden Heizrohr (7) vorbeizielt.

3. Befüllvorrichtung nach Anspruch 2, **dadurch gekennzeichnet, dass** der Versatz der Paddel (21) derart gewählt ist, dass sie in einer Grundstellung sich nach entgegengesetzten Richtungen erstrecken.

4. Befüllvorrichtung nach einem der Ansprüche 2 oder 3, **dadurch gekennzeichnet, dass** der Zuführschacht (2,23) in dem das Rührwerk (19) umgebenden Bereich hohlzylinderförmig ausgebildet ist.

5. Befüllvorrichtung nach Anspruch 2 oder einem der folgenden, **dadurch gekennzeichnet, dass** die Paddel (21) aus Gummi bestehen.

6. Befüllvorrichtung nach Anspruch 2 oder einem der folgenden, **dadurch gekennzeichnet, dass** die Paddel (21) aus einem harten Material, z.B. Stahl, bestehen und gegebenenfalls federnd nachgiebig befestigt bzw. gelagert sind.

7. Befüllvorrichtung insbesondere nach Anspruch 2 oder einem der folgenden, **dadurch gekennzeichnet, dass** der Zuführschacht (19) sowie eine Halterung (26) für einen die Einfüllöffnung (14) des Füll- und Pressraumes (5) abdeckenden Schließschiebers (25) an einer oberen, sich parallel zur Strangpressachse erstreckenden Schwenkachse (24) derart pendelförmig bewegbar gelagert sind, dass in den Endstellungen der Pendelbewegung die Einfüllöffnung (14) entweder vom Schließschieber (25) abgedeckt ist oder deckungsgleich zur Austrittsöffnung (14) des Zuführschachtes (2) liegt.

8. Befüllvorrichtung nach Anspruch 7, **dadurch gekennzeichnet, dass** die Schwenkachse (24) in der durch die Strangpressachse verlaufenden vertikalen Ebene liegt.

9. Befüllvorrichtung nach Anspruch 7 oder 8, **dadurch gekennzeichnet, dass** der Schließschieber (25) an seiner Halterung (26) höhenverstellbar befestigt ist.

## Claims

1. Process for extruding hollow strands from plant fragments (3), in particular wooden fragments (3), having a horizontally acting ram extruder in the case of which a feed shaft (2) opens out into a filling and pressing chamber (5) by way of its bottom end and can be closed by a closing slide (6) which can move back and forth and has a through-passage opening, the extruding ram being guided on at least one mandrel (7) which passes through the filling and pressing chamber (5) in the extruding direction, **characterized in that** the mandrel is designed as a heating tube, and **in that** the plant fragments, during the operation of filling the filling and pressing chamber (5), are conveyed specifically in the direction of the chamber region located beneath the heating tube (7), by an agitator (19) which is located in the bottom part of the feed shaft (2) and comprises two spindles (20) with paddles (21) mounted parallel to one another.

2. Filling apparatus for the filling and pressing chamber (5) of a horizontal extruder for carrying out the process according to Claim 1, comprising an upright feed shaft (2) which is intended for the plant fragments (3) to be compressed and of which the outlet opening (14), which is located at the bottom, ends up congruent with the introduction opening (14) of the filling and pressing chamber (5), it being possible for said introduction opening to be closed by means of a closing slide (6), and it being possible for an agitator (19) which is mounted in the bottom part of the feed shaft (2) such that it can be rotated parallel to the extruding axis, to be driven, at least temporarily, in order to accelerate the filling operation, **characterized in that** the agitator (19) comprises two paddles (21) which are mounted parallel to one another by way of their spindles (20), can be driven in opposite directions of rotation and are offset in relation to one another, the conveying direction of the paddles (21) passing a heating tube (7) which passes through the filling and pressing chamber (5).

3. Filling apparatus according to Claim 2, **characterized in that** the offset of the paddles (21) is selected such that, in a basic position, they extend in opposite directions.

4. Filling apparatus according to either of Claims 2 or 3, **characterized in that** the feed shaft (2, 23) is of hollow-cylindrical design in the region enclosing the agitator (19).

5. Filling apparatus according to Claim 2 or one of the following claims, **characterized in that** the paddles (21) consist of rubber.

6. Filling apparatus according to Claim 2 or one of the following claims, **characterized in that** the paddles (21) consist of a hard metal, e.g. steel, and are fastened or mounted, if appropriate, in a resiliently compliant manner.

7. Filling apparatus in particular according to Claim 2 or one of the following claims, **characterized in that** the feed shaft (19) and a holder (26) for a closing slide (25), which covers the introduction opening (14) of the filling and pressing chamber (5), are mounted for pendulum movement on a top pivot axis (24), extending parallel to the extruding axis, such that in the end positions of the pendulum movement, the introduction opening (14) either is covered by the closing slide (25) or is congruent with the outlet opening (14) of the feed shaft (2).

8. Filling apparatus according to Claim 7, **characterized in that** the pivot axis (24) is located in the vertical plane running through the extruding axis.

9. Filling apparatus according to Claim 7 or 8, **characterized in that** the closing slide (25) is fastened in a vertically adjustable manner on its holder (26).

## Revendications

1. Procédé d'extrusion de cordons creux en petites parties (3) végétales, notamment en bois, comprenant une extrudeuse à piston travaillant horizontalement, dans laquelle un puits (2) d'amenée débouche par son extrémité inférieure dans une chambre (5) de remplissage et de pressage et peut être fermé par un tiroir (6) de fermeture allant et venant et ayant une ouverture de passage, le piston de l'extrudeuse étant guidé sur au moins un mandrin (7) traversant la chambre (3) de remplissage et de pressage dans la direction d'extrusion, **caractérisé en ce que** le mandrin est constitué en tube de chauffage et **en ce que** les petites parties végétales sont transportées lors du remplissage de la chambre (5) de remplissage et de pressage de manière ciblée en direction de la partie de la chambre de trouvant en-dessous du tube (7) de chauffage par un agitateur (19) se trouvant dans la partie inférieure du puits (2) d'amenée et constitué de deux axes (20) ayant des palettes (21) montées parallèlement l'une à l'autre.

2. Dispositif de remplissage pour la chambre (5) de remplissage et de pressage d'une extrudeuse horizontale pour la mise en oeuvre du procédé suivant la revendication 1, constitué d'un puits (2) vertical d'amenée des petites parties (3) végétales à presser, dont l'ouverture (14) de sortie se trouvant en-dessous coïncide avec l'ouverture (14) d'entrée de la chambre (5) de remplissage et de pressage, ouverture qui peut être fermée au moyen d'un tiroir (6) de fermeture, un dispositif (19) d'agitation monté tournant parallèlement à l'axe de l'extrudeuse dans la partie inférieure du puits (2) d'amenée pouvant être, pour accélérer l'opération de remplissage, entraîné au moins de temps en temps, **caractérisé en ce que** le dispositif (19) d'agitation est constitué de deux pales (21) montées parallèlement entre elles par leur axe (20) et pouvant être entraînées en rotation en sens opposés et étant disposées de manière décalée l'une par rapport à l'autre, la direction de transport des pales (21) passant devant un tube (7) de chauffage qui traverse la chambre (5) de remplissage et de pressage.

3. Dispositif de remplissage suivant la revendication 2, **caractérisé en ce que** le décalage des pales (21) est choisi de façon à ce qu'elles s'étendent en une position de base dans des directions opposées.

4. Dispositif de remplissage suivant l'une des revendications 2 ou 3, **caractérisé en ce que** le puits (2, 23) d'amenée est sous la forme d'un cylindre creux dans la partie entourant le dispositif (19) d'agitation.

5. Dispositif de remplissage suivant l'une des revendications 2 ou l'une des suivantes, **caractérisé en ce que** les pales (21) sont en caoutchouc.

6. Dispositif de remplissage suivant l'une des revendications 2 ou l'une des suivantes, **caractérisé en ce que** les pales (21) sont en un matériau dur, par exemple en acier et, le cas échéant, sont fixées ou montées de manière à céder élastiquement.

7. Dispositif de remplissage notamment suivant la revendication 2 ou l'une des suivantes, **caractérisé en ce que** le puits (19) d'amenée ainsi qu'une fixation (26) pour un tiroir (25) de fermeture recouvrant l'ouverture (14) de remplissage de la chambre (5) de remplissage et de pressage sont montés mobiles en forme de pendule sur un axe (24) supérieur de basculement s'étendant parallèlement à l'axe de l'extrudeuse de façon à ce que, dans les positions d'extrémité du mouvement pendulaire, l'ouverture (14) de remplissage ou bien soit recouverte par le tiroir (25) de fermeture ou bien coïncide avec l'ouverture (14) de sortie du puits (2) d'amenée.

8. Dispositif de remplissage suivant la revendication 7, **caractérisé en ce que** l'axe (24) de basculement est dans le plan vertical passant par l'axe de l'extrudeuse.

9. Dispositif de remplissage suivant la revendication 7 ou 8, **caractérisé en ce que** le tiroir (25) de fermeture est fixé de manière réglable en hauteur à sa fixation (26).
